# EUROPEAN PATENT SPECIFICATION

(11) **EP 1 644 650 B1**
(45) Date of publication and mention of the grant of the patent: **11.05.2011**
(21) Application number: 04748718.6
(22) Date of filing: 08.07.2004
(51) Int. Cl.: F16C 35/07, B23K 1/00

(54) **BEARING UNIT WITH BRAZED OR SOLDERED CONNECTION**
LAGEREINHEIT MIT LOT- ODER HARTLOTVERBINDUNG
UNITE DE SUPPORT COMPRENANT DES RACCORDS BRASES OU SOUDES

(30) Priority: 10.07.2003 NL 1023883; 21.11.2003 NL 1024843
(43) Date of publication of application: 12.04.2006
(73) Proprietor: AB SKF, 415 50 Göteborg (SE)
(72) Inventor: VAN DE SANDEN, Johannes, Franciscus, NL-3435 DT Nieuwegein (NL); VAN BREEMEN, Rene, Gijsbertus, Adrianus, NL-1943 DH Beverwijk (NL); KAPAAN, Hendrikus, Jan, NL-3435 DM Nieuwegein (NL); EYRAUD, Emmanuel, Jacques, I-10060 San Secondo di Pinerolo (IT); ZWARTS, Jacobus, NL-3438 VA Nieuwegein (NL); VISSERS, Cornelius, Petrus, Antonius, NL-5275 BT Den Dungen (NL)
(74) Representative: Burö, Sven Peter
(86) International application number: PCT/NL2004/000492
(87) International publication number: WO 2005/005062

(56) References cited:
- NL-C- 1 013 785
- US-A- 4 405 032
- US-A- 4 419 816

## Description

The invention is related to a bearing unit, comprising at least two bearing means which are displaceably supported with respect to each other, at least one of which bearing means comprises two metal means parts which are connected to each other through a connection means wherein the connection means comprises a brazed and/or soldered connection. Such a bearing unit is disclosed in US-A-4606657.

Other prior art bearing units, which are welded together, exhibit several problems, which are caused by the fact that the welding process generates fairly high temperatures. These high temperatures lead to distortions and loss of quality.

Brazing is a thermal process for the joining of materials involving molten filler material to wet the mating surfaces with or without the aid of a fluxing agent, leading to the formation of a metallurgical bond between the filler material and the respective components. In brazing the melting temperature of the filler material is above 450°C but below the melting temperature of the components.

High Temperature Brazing (HTB) is similar to brazing with the difference that in HTB no fluxing agents are used. In High Temperature Erazing the fluxing activity (reduction/removing of surface oxides) is achieved by reducing atmospheres or vacuum. Usually High Temperature Brazing is done at temperatures above 300°C.

Soldering is as brazing but the melting temperatures of the filler materials is below 450°C.

Brazing and High Temperature Brazing can be characterized by the means of the heating techniques used. In principle these techniques include heating by flame, e.g. by gas fired burners such as oxygen/acetylene or oxygen/propane burners. Further techniques are heating by electrical power, resistance heating, radiant infrared, induction heating and arc brazing.

Also high power beam heating by means of a light beam (not laser), a laser beam as electron beam heating are feasible. Other heating techniques include salt bath heating and hot dip brazing.

Brazing/high temperature brazing can be done with one of the above heating methods, in a one by one technique such as manual flame brazing of piping if only a few parts need to be made, an oxygen/gas burner will be used.

For series and mass production, installations can be used especially adapted to the products to be made. Typical examples are:
- Hot dip installations and hot salt bath brazing
- Flame heating installations with feed through systems
- Laser or arc heating for line of sight heating of products to be brazed one by one or line feed production, with or without protective atmosphere/vacuum
- Electron beam heating in vacuum chambers.
- Induction heating installations with feed through systems with or without vacuum chambers.

Processes that are more adapted to general used and which can handle different size and dimensions of products are:
- Conveyor or chain belt furnaces working with gas fired heaters of electrical heating. These furnaces can work with protective, or reducing atmospheres
- Batch furnaces working with reducing or protective atmosphere
- Vacuum furnaces with electrical heating. Special technologies are the arc brazing processes and laser beam brazing. In some occasions these techniques are combined to hybrid brazing technologies. As in arc welding the arc, often a metal gas arc as used in MIG/MAG (GMAW) welding technologies, is used to melt the filler material that is fed trough the nozzle. Such processes are typically "line of sight" processes.

Very complicated processed can be build when using modem (vacuum) furnaces. Such processes can incorporate the brazing and subsequent heat treatment processes such as hardening and tempering.

In principle, brazing/high temperature brazing is followed by bringing the temperature of the products to the required austenitizing temperature and after the required time the products can be removed from the vacuum chamber into the build in oil quench bath of the furnace or the vacuum furnace can be equipped with a gas quenching installation which is mostly using high pressure cooled nitrogen gas to quench the products.

Selection of the heating technique and the processes is (among others) depending on the:
- materials to be joined
- braze (filler) materials to be used
- shape and dimensions of the product
- number of parts
- available techniques
- economics
- environmental issues.

The brazing or soldering process leads to temperatures which are relatively low in comparison to a welding process. As a result, the level of distortions in the bearing is much lower, and at the same time the quality of the bearing steel material can be maintained.

The invention is carried out by providing both a brazed or soldered connection, as well as a further connection such as a welded connection, a screwed connection, a plastically formed connection or e.g. a clamp or clip ring connection it becomes possible to provide a wider range of specific bearing units. As an example, reference is made to a bearing unit comprising two series of rolling elements which are each in contact with a raceway of one of the ring means parts, wherein each ring means part is connected to an auxiliary ring part through a brazed connection, and said auxiliary ring parts are connected to each other through a welded connection.

The ring means parts can be of a steel type which is particularly fit for rolling contacts. In contrast, the auxiliary ring parts can be selected from steel types which enable a desired welding process to be carried out, e.g. a laser welding process. In this way for instance the ring means parts and the auxiliary rings together constitute the inner ring means. At the same time a specific bearing play or bearing preload can be obtained. The invention is applicable to all kinds of bearings, including rolling element bearings and plain bearings.

In a second type, the invention is related to a bearing assembly, comprising a bearing unit with at least two bearing means which are displaceably supported with respect to each other, and an auxiliary unit which is connected to at least one of said bearing means through a connection means. According to the invention, the connection means comprises a brazed or soldered connection. As an example reference is made to auxiliary elements carried out as e.g. additional supports for specific bearing unit applications, such as wheel bearing units. Also, brake drums, brake disks, vanes for cooling purposes etc. can be mounted in this way to a bearing unit.

A major advantage of the bearing units addressed before is furthermore related to ability to apply welding techniques. The application of welding techniques is usually limited to low carbon steels. In the field of bearing units however, high carbon steels are applied. A welding process performed on such high carbon steels would lead to the development of severe welding imperfections which are detrimental to the functionality of the bearing unit. Only by means of extreme precautions some of the problems associated with the welding of high carbon steels can be mitigated. Very often however such precautions cannot be applied due to handling problems and heat input.

As an example, reference is made to the following steel types. A very common bearing steel is SAE52100 or DIN100Cr6, which has 1wt% carbon and 1,5 wt% chromium. Reference is also made to induction hardening steels such as SAE1070 and SAE1055. For applications with higher demands, special steel types have been developed such as Werkstoff number1.3503, 1.3501, 1.3520, 1.3536, 1.3543, 1.3549, 1.3551 and 1.3553. In addition, stainless steels for bearings include AISI 440C and D. The high speed steel M50 is applied for aircraft bearings. These types of steel have in common a high carbon content as well as alloy elements which are carbide formers. the carbon in these steel types is responsible for the high hardness; the alloy elements such as Cr, Mo provide an improvement in the hardening depth. In general, welding of said steel types is not feasible.

The invention will now be described further with reference to the embodiments shown in the drawings.
Figures 1a and 1b show a bearing unit according to the invention with brazed, welded respectively forged connections.
Figure 2 shows a bearing unit with a screwed connection.

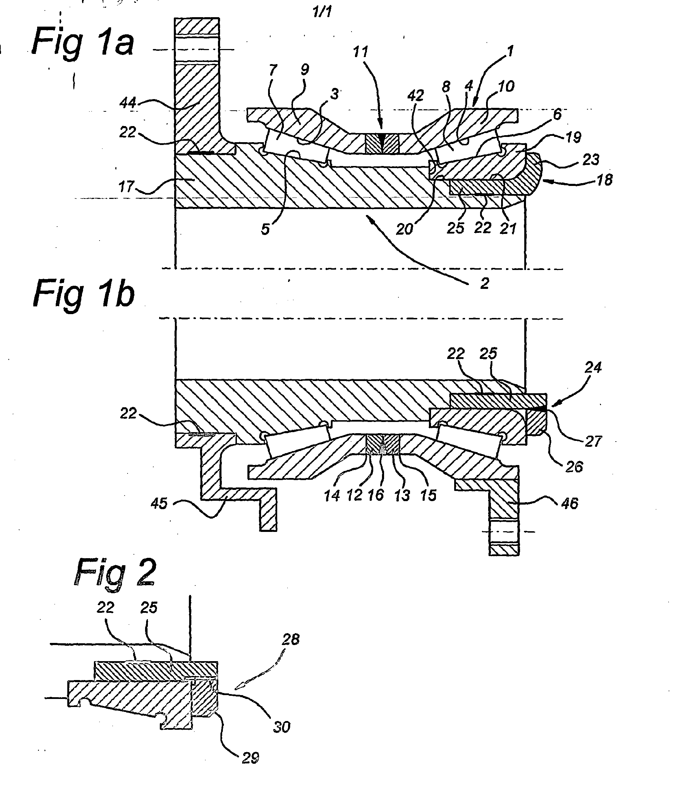

The bearing unit shown in figures 1a and 1b is given as an example for illustrating specific embodiments of the invention. It is to be noted that the invention is however not limited to such kind of bearing units, but that other bearing units with different kind of rollers or of other types are also within the scope of the invention.

The bearing unit shown in figures 1a and 1b has an outer bearing means 1 and an inner bearing means 2 which each comprise cone shaped raceways 3 up to 6. Between the cone shaped pair of raceways 3, 5 series of conical rolling elements 7 is accommodated, between the pair of conical raceways 4, 6 a series of conical rolling elements 8. These elements 7 respectively 8 are separated from each other by means of a cage (not shown).

The outer ring means comprises outer ring means parts 9, 10, which are mutually connected through the connecting means 11 according to the invention. The connecting means 11 comprises two intermediate ring parts 12, 13, which are each, through a respective brazed or soldered connection 14, 15 to a respective outer ring means part 9, 10. In turn, the intermediate ring parts 12, 13 are connected to each other by means of the weld 16.

Having regard to the fact that no welding operation is carried out on the ring means parts 9, 10 themselves, they can be made of a high carbon steel type which is in particular fit for rolling bearing applications. In contrast, the intermediate ring parts 12, 13 may consist of a low carbon type steel part which is particularly fit for welding purposes. The intermediate ring parts 12, 13 are themselves by means of a brazed or soldered connection 14, 15 connected to the outer ring means 9, 10, which means that a strong and stiff connection is obtained without however subjecting these high carbon outer ring means parts 9, 10 to extreme temperatures.

The inner ring means 2 comprises a carrier ring 17 which carries one of the inner conical raceways 5. The other inner conical raceway 6 is accommodated on a ring piece 19 which is slid onto the cylindrical surface 20 of the carrier ring 17 and the corresponding cylindrical surface 21 of the connection ring 18 as shown in figure 1a. To that end, the original shape of the connection ring 18 is fully cylindrical so as to enable the sliding action for positioning of the bearing ring 19.

Through a brazed or soldered connection 22, said connection ring 18 is connected to the carrier ring 17. Subsequently, by means of a cold forming rolling process, the bead 23 is formed. During the formation of this bead 23, the bearing ring 19 is brought into its final position, and the preload (against the abutment 42) or preplay envisaged is obtained within the bearing unit.

In figure 1b a connection means 24 is applied comprising a connecting sleeve 25, connected to the carrier ring 17 by means of a brazed or soldered connection 22. A radially outwardly extending ring 26 is connected to the connecting sleeve 25 by means of the weld 27. When applying the ring 26, the required preload or preplay can again be established in the bearing as in the former case.

In these embodiments as well, the brazed connections 22 allow for the selection of specific materials (high carbon/low carbon), which are particularly suitable for welding or forging the respective components. Here as well, the high carbon bearing ring 19 needs not to be welded.

The alternative of figure 2 is to a large extent similar to the embodiment of figure 1. It shows a connection means 28 consisting of a sleeve 25, onto which a ring 29 is connected by means of a screw threaded connection 30. Also this screw threaded connection can be used to obtain the required preload or preplay.
Figure 1a shows a mounting flange 44 which is connected to the carrier ring 17 by means of a brazed or soldered connection 22. Said flange 44 may comprise a cost iron material, e.g. an ausformed ductile iron (ADI).
Figure 1b shows a further mounting flange 45, mounted by means of a brazed or soldered connection 22 as well.

Although in figures 1a, 1b and 2 the ring means parts 17, 19 are connected to each other by means of both a brazed/soldered connection and a further connection, e.g. a welded connection, it is also possible to connect said ring means parts to each other through a brazed/soldered connection only.

## Claims

1. Bearing unit, comprising at least two bearing means (1, 2) which are displaceably supported with respect to each other, at least one of which bearing means (1, 2) comprises two metal means parts (9, 10; 17, 19) which are connected to each other through a connection means (11; 18; 24; 28), wherein the connection means (11; 18; 24; 28) comprises a brazed and/or soldered connection (14, 15; 22) **characterised in that** the connection means (11; 18; 24; 28) also comprises at least one further connection, e.g. a welded (16; 27), screwed (30), glued or a plastically formed (23) connection.

2. Bearing unit according to claim 1, wherein the bearing means are carried out as ring means (1, 2) which are rotatably supported with respect to each other, at least one of said ring means (1, 2) comprising ring means parts (9, 10; 17, 19) which are connected through a connection means (11; 18; 24; 28) which comprises a brazed and/or a soldered connection (14, 15; 22).

3. Bearing unit according to claim 2, wherein at least two series of rolling elements (7, 8) are provided which are each in contact with respective raceways (3, 4) of both ring means parts (9, 10), wherein each ring means part (9, 10) is connected to an intermediate ring part (12, 13) through a brazed connection (14, 15), and said intermediate ring parts (12, 13) are connected to each other through a welded connection (16).

4. Bearing unit according to claim 2 or 3, wherein at least two series of rolling elements (7, 8) are provided which are each in contact with respective raceways (5, 6) of both ring means parts (17, 19), one of said ring means parts (17) comprising an abutment (42) and being connected to an intermediate ring part (25) through a brazed connection (22), said intermediate ring part (25) comprising a flange (23, 26, 29) which is positioned at one axial end of the other ring means part (19), the other end of which abutting against said abutment (42).

5. Bearing unit according to claim 4, wherein the flange (29) is connected to the intermediate ring part (23) through a screw connection (30).

6. Bearing unit according to claim 4, wherein the flange (26) is connected to the intermediate ring part (25) through a welded connection (27).

7. Bearing unit according to claim 4, wherein the flange (23) is obtained through plastic deformation of the intermediate ring part (25).

8. Bearing unit according to any of claims 3-7, wherein the ring means parts (9, 10) and the intermediate ring parts (12, 13) together constitute an inner ring means (2) and/or an outer ring means (1).

9. Bearing unit according to any of the preceding claims, wherein the connection means (11; 18; 24; 28) have concentric facing surfaces which enclose a layer of brazed material (22; 32).

10. Bearing unit according to claim 1, wherein the bearing means are slidably supported with respect to each other.

11. Bearing unit according to any of the preceding claims, wherein the connection means (11; 18; 24; 28) comprises a relatively high grade material, e.g. a low carbon, high strength steel material, stainless steel or non-ferro materials like copper alloys, nickel alloys etc.

12. Bearing unit according to any of the preceding claims, wherein the connection means (11; 18, 24, 28) comprises a light weight material, e.g. aluminium, titanium, magnesium or their alloys.

13. Bearing unit according to any of the preceding claims, wherein at least one of the bearing means (1, 2) and/or the connection means (11; 18; 24; 28) comprises a ceramic component.

## Patentansprüche

1. Lagereinheit, umfassend mindestens zwei Lagermittel (1, 2), die bezüglich einander verschiebbar gestützt werden, wobei mindestens eines der Lagermittel (1, 2) zwei Metallmittelteile (9, 10; 17, 19) umfasst, die durch ein Verbindungsmittel (11; 18; 24; 28) verbunden sind, wobei das Verbindungsmittel (11; 18; 24; 28) eine hartgelötete und/oder eine weichgelötete Verbindung (14, 15; 22) umfasst, **dadurch gekennzeichnet, dass** das Verbindungsmittel (11; 18; 24; 28) des Weiteren mindestens eine weitere Verbindung, zum Beispiel eine geschweißte (16; 27), geschraubte (30), geklebte oder eine plastisch geformte (23) Verbindung umfasst.

2. Lagereinheit nach Anspruch 1, wobei die Lagermittel als Ringmittel (1, 2) ausgeführt werden, die bezüglich einander drehbar gestützt werden, wobei mindestens eines der Ringmittel (1, 2) Ringmittelteile (9, 10; 17, 19) umfasst, die durch ein Verbindungsmittel (11; 18; 24; 28) miteinander verbunden sind, das eine hartgelötete und/oder eine weichgelötete Verbindung (14, 15; 22) umfasst.

3. Lagereinheit nach Anspruch 2, wobei mindestens zwei Reihen von Wälzkörpern (7, 8) vorgesehen sind, die jeweils in Kontakt mit jeweiligen Laufbahnen beider Ringmittelteile (9, 10) stehen, wobei jedes Ringmittelteil (9, 10) durch eine hartgelötete Verbindung (14, 15) mit einem Zwischenringteil (12, 13) verbunden ist und die Zwischenringteile (12, 13) durch eine geschweißte Verbindung (16) miteinander verbunden sind.

4. Lagereinheit nach Anspruch 2 oder 3, wobei mindestens zwei Reihen von Wälzkörpern (7, 8) vorgesehen sind, die jeweils in Kontakt mit jeweiligen Laufbahnen (5, 6) beider Ringmittelteile (17, 19) stehen, wobei eines der Ringmittelteile (17) eine Anlagefläche (42) umfasst und durch eine hartgelötete Verbindung (22) mit einem Zwischenringteil (25) verbunden ist, wobei der Zwischenringteil (25) einen Flansch (23, 26, 29) umfasst, der an einem axialen Ende des anderen Ringmittelteils (19) positioniert ist, dessen anderes Ende an der Anlagefläche (42) anstößt.

5. Lagereinheit nach Anspruch 4, wobei der Flansch (29) durch eine Schraubverbindung (30) mit dem Zwischenringteil (23) verbunden ist.

6. Lagereinheit nach Anspruch 4, wobei der Flansch (26) durch eine geschweißte Verbindung (27) mit dem Zwischenringteil (25) verbunden ist.

7. Lagereinheit nach Anspruch 4, wobei der Flansch (23) durch plastische Verformung des Zwischenringteils (25) erhalten wird.

8. Lagereinheit nach einem der Ansprüche 3 - 7, wobei die Ringmittelteile (9, 10) und die Zwischenringteile (12, 13) zusammen ein Innenringmittel (2) und/oder ein Außenringmittel (1) bilden.

9. Lagereinheit nach einem der vorhergehenden Ansprüche, wobei die Verbindungsmittel (11; 18; 24; 28) einander zugekehrte konzentrische Flächen aufweisen, die eine Schicht aus hartgelötetem Material (22; 32) einschließen.

10. Lagereinheit nach Anspruch 1, wobei die Lagermittel bezüglich einander verschiebbar gestützt werden.

11. Lagereinheit nach einem der vorhergehenden Ansprüche, wobei die Verbindungsmittel (11; 18; 24; 28) ein Material relativ hoher Qualität umfassen, zum Beispiel ein kohlenstoffarmes, hochfestes Stahlmaterial, rostfreien Stahl oder Nichteisenmaterialien, wie Kupferlegierungen, Nickellegierungen usw.

12. Lagereinheit nach einem der vorhergehenden Ansprüche, wobei die Verbindungsmittel (11; 18; 24; 28) ein leichtes Material, zum Beispiel Aluminium, Titan, Magnesium oder ihre Legierungen umfassen.

13. Lagereinheit nach einem der vorhergehenden Ansprüche, wobei mindestens eines der Lagermittel (1, 2) und/oder der Verbindungsmittel (11; 18; 24; 28) eine keramische Komponente umfasst.

## Revendications

1. Unité de support, comprenant au moins deux moyens de support (1, 2), qui sont supportés de manière déplaçable l'un par rapport à l'autre, dont au moins l'un (1, 2) comprend deux parties de moyen en métal (9, 10 ; 17, 19), qui sont connectées l'une à l'autre par un moyen de connexion (11 ; 18 ; 24 ; 28), le moyen de connexion (11 ; 18 ; 24 ; 28) comprenant une connexion brasée et/ou soudée (14, 15 ; 22), **caractérisée en ce que** le moyen de connexion (11 ; 18 ; 24 ; 28) comprend aussi au moins une connexion supplémentaire, par exemple une connexion soudée (16 ; 27), vissée (30), collée ou formée plastiquement (23).

2. Unité de support selon la revendication 1, dans laquelle les moyens de support sont réalisés sous forme de moyens de bague (1, 2), qui sont supportés à rotation l'un par rapport à l'autre, au moins l'un desdits moyens de bague (1, 2) comprenant des parties de moyen de bague (9, 10 ; 17, 19) qui sont connectées par un moyen de connexion (11 ; 18 ; 24 ; 28) qui comprend une connexion brasée et/ou soudée (14, 15 ; 22).

3. Unité de support selon la revendication 2, dans laquelle au moins deux séries d'éléments de roulement (7, 8) sont prévues, lesquelles sont chacune en contact avec des chemins de roulement respectifs (3, 4) des deux parties de moyen de bague (9, 10), chaque partie de moyen de bague (9, 10) étant connectée à une partie de bague intermédiaire (12, 13) par une connexion brasée (14, 15), et lesdites parties de bagues intermédiaires (12, 13) étant connectées l'une à l'autre par une connexion soudée (16).

4. Unité de support selon la revendication 2 ou 3, dans laquelle au moins deux séries d'éléments de roulement (7, 8) sont prévues, lesquelles sont chacune en contact avec des chemins de roulement respectifs (5, 6) des deux parties de moyen de bague (17, 19), l'une desdites parties de moyen de bague (17) comprenant une butée (42) et étant connectée à une partie de bague intermédiaire (25) par une connexion brasée (22), ladite partie de bague intermédiaire (25) comprenant une bride (23, 26, 29) qui est positionnée à une extrémité axiale de l'autre partie de moyen de bague (19), dont l'autre extrémité bute contre ladite butée (42).

5. Unité de support selon la revendication 4, dans laquelle la bride (29) est connectée à la partie de bague intermédiaire (23) par une connexion vissée (30).

6. Unité de support selon la revendication 4, dans laquelle la bride (26) est connectée à la partie de bague intermédiaire (25) par une connexion soudée (27).

7. Unité de support selon la revendication 4, dans laquelle la bride (23) est obtenue par déformation plastique de la partie de bague intermédiaire (25).

8. Unité de support selon l'une quelconque des revendications 3 à 7, dans laquelle les parties de moyen de bague (9, 10) et les parties de bague intermédiaires (12, 13) constituent ensemble un moyen de bague interne (2) et/ou un moyen de bague externe (1).

9. Unité de support selon l'une quelconque des revendications précédentes, dans laquelle les moyens de connexion (11 ; 18 ; 24 ; 28) ont des surfaces en regard concentriques qui renferment une couche de matériau brasé (22 ; 32).

10. Unité de support selon la revendication 1, dans laquelle les moyens de support sont supportés de manière coulissante l'un par rapport à l'autre.

11. Unité de support selon l'une quelconque des revendications précédentes, dans laquelle les moyens de connexion (11 ; 18 ; 24 ; 28) comprennent un matériau de relativement grande qualité, par exemple un matériau en acier à faible teneur en carbone et haute résistance, en acier inoxydable ou en matériaux non ferreux, comme des alliages de cuivre, des alliages de nickel, etc.

12. Unité de support selon l'une quelconque des revendications précédentes, dans laquelle les moyens de connexion (11 ; 18, 24, 28) comprennent un matériau de poids léger, par exemple de l'aluminium, du titane, du magnésium ou leurs alliages.

13. Unité de support selon l'une quelconque des revendications précédentes, dans laquelle au moins l'un des moyens de support (1, 2) et/ou des moyens de connexion (11 ; 18 ; 24 ; 28) comprend un composant céramique.
